# EUROPÄISCHE PATENTSCHRIFT

(11) **EP 1 036 769 B1**
(45) Veröffentlichungstag und Bekanntmachung des Hinweises auf die Patenterteilung: **01.09.2004**
(21) Anmeldenummer: 00105538.3
(22) Anmeldetag: 16.03.2000
(51) Int. Cl.: C02F 1/46

(54) **Vorrichtung zur elektrolytischen Behandlung von Wasser bzw. wässrigen Lösungen**
Apparatus for electrolytic treatment of water or aqueous solutions
Appareil pour le traitement electrolytique de l eau ou de solutions aqueuses

(30) Priorität: 17.03.1999 DE 19911875
(43) Veröffentlichungstag der Anmeldung: 20.09.2000
(73) Patentinhaber: Judo Wasseraufbereitung GmbH, D-71364 Winnenden (DE)
(72) Erfinder: Dr. Söcknick Ralf, 70806 Kornwestheim (DE); Neidhardt Klaus, 75228 Ispringen (DE); Bomm Günter, 71522 Backnang (DE)
(74) Vertreter: KOHLER SCHMID + PARTNER

(56) Entgegenhaltungen:
- EP-A- 0 037 325
- WO-A-96/38384
- WO-A-98/16477
- DE-A- 2 652 444
- US-A- 4 400 250
- US-A- 5 256 268
- DATABASE WPI Section Ch, Week 197836 Derwent Publications Ltd., London, GB; Class A88, AN 1978-64414A XP002138642 & JP 53 088665 A (TOKYO ELECTRIC CO LTD), 4. August 1978 (1978-08-04)

## Beschreibung

Die Erfindung betrifft eine Vorrichtung zur Verhinderung von unerwünschten Kalkausfällungen durch elektrolytische Behandlung von Wasser bzw. wässrigen Lösungen, mit mindestens zwei räumlich voneinander beabstandeten Elektroden, die im Betriebszustand auf unterschiedlichen elektrischen Potentialen gehalten werden, wobei die Potentialdifferenz mindestens so groß gewählt ist, dass eine Elektrolyse von Wasser zwischen den Elektroden erfolgt, mit einer Schüttung von Kohlenstoffpartikeln, in die elektrolytisch beständige Stromzuführungen hineinragen, über welche Elektrolysestrom in die Elektroden eingeleitet wird, und mit einem Diaphragma aus nichtleitendem Material, welches für die wässrige Lösung und den elektrischen Strom durchlässig ist, nicht jedoch für die Kohlenstoffpartikel der Schüttung, wobei mindestens eine Anode vorgesehen ist, die aus einer Stromzuführung, der Schüttung von Kohlenstoffpartikeln, in welche die Stromzuführung hineinragt, sowie dem die Schüttung umgebenden Diaphragma aufgebaut ist, wobei das Diaphragma so ausgebildet ist, dass es die äußere Form der Anode, deren räumlichen Lage, sowie deren Abstand zur nächstgelegenen Kathode bestimmt, und wobei zwischen dem Diaphragma und der nächstgelegenen Kathode keine Kohlenstoffpartikel angeordnet sind.

Eine derart aufgebaute Elektrolysevorrichtung ist aus der US-A 3,915,822 bekannt. Die dort beschriebene elektrochemische Vorrichtung ist allerdings nicht zur Verhinderung von Härteausfällungen aus Wasser, sondern zur Rückgewinnung von Metallen aus wässrigen Lösungen ausgelegt.

Bei der Elektrolyse von Wasser bzw. wässrigen Lösungen besteht eines der Hauptprobleme darin, daß die als Anode geschaltete Elektrode einem sehr starken elektrolytischen und/oder chemischen Angriff ausgesetzt wird. Durch die positive Ladung erhöht sich die Neigung von metallischen Anodenwerkstoffen in der Regel dramatisch, als positiv geladene Metallionen in Lösung zu gehen.

Hinzu kommt, daß sich an der Anode sowohl Sauerstoffradikale, als auch H+-Ionen bilden, die den Anodenwerkstoff angreifen können. Daher kommen nur wenige Werkstoffe wie z. B. platiniertes Titan oder Graphit als Anodenmaterial in Frage.

Inertelektroden, die Edelmetalle beinhalten, sind naturgemäß ausgesprochen kostspielig und die aktive Anodenfläche wird dementsprechend so klein wie möglich gehalten, was wiederum den elektrischen Widerstand der Elektrolysezelle vergrößert. Graphitelektroden sind zwar wesentlich kostengünstiger, sie lassen sich aber mit vernünftigem Aufwand nur als Stab- oder Plattenmaterial herstellen. Komplexe oder großflächige Anodenformen würden wiederum zu einem erheblichen Aufwand führen.

In der DE 26 52 444 A wird ein Apparat zur Reinigung von Abwässern mittels Aktivkohle vorgestellt. Der Apparat besteht aus einer zylindrischen Kolonne mit einer zentralen, stabförmigen Kathode, welche durch eine Membran vom übrigen Innenraum der Kolonne getrennt ist. Dieser übrige Innenraum ist weitgehend mit einer Filtermasse, nämlich einer losen Schüttung aus Aktivkohle, befüllt, in die mehrere Graphitstäbe hineinragen. Die Graphitstäbe und die Filtermasse bilden die Anode des Apparats. Zur Reinigung von Abwässern, insbesondere Industrieabwässern und sanitären Abwässern, durchströmt das Wasser die Filtermasse, wobei ein erster Teil der Verunreinigungen an der Aktivkohle, welche eine besonders große Oberfläche besitzt, absorbiert wird. Eine elektrische Spannungsbeaufschlagung bewirkt die Erzeugung von reaktivem Sauerstoff an der Anode. Dies führt sowohl zur Regeneration der Aktivkohle durch Oxidation der Oberfläche der Aktivkohle als auch zur direkten Oxidation eines zweiten Teils der Verunreinigungen im Abwasser.

Aufgabe der vorliegenden Erfindung ist es demgegenüber, eine Elektrolysevorrichtung der eingangs beschriebenen Art mit möglichst einfachen Mitteln dahingehend weiterzubilden, daß beliebige Geometrien hinsichtlich der äußeren Form der Anode leicht herstellbar sind, und daß eine größere Werkstoffauswahl, insbesondere im Hinblick auf unterschiedliche Dichten und Porengrößen zur zielgenauen Anpassung an die jeweiligen Erfordernisse der Elektrolysevorrichtung zur Auswahl stehen.

Die vorliegende Erfindung löst diese Aufgabe auf ebenso einfache wie kostengünstige Weise dadurch, daß die Kohlenstoffpartikel der Schüttung an ihrem Platz fixiert sind und Graphitpartikel enthalten, dass die Anode aus einer Festbettschüttung, einer in die Schüttung hineinragenden Stromzuführung sowie den die Anode umgebenden Wänden einschließlich des Diaphragmas als formgebenden Teilen der Anode besteht, dass die Schüttungsdichte der Kohlenstoffpartikel zwischen 400 und 750 g/l beträgt, dass das Diaphragma aus einem Sinterwerkstoff aus Kunststoff besteht, dessen Poren kleiner als die Korngröße der für die Anodenschüttung verwendeten Kohlenstoffpartikel sind, und dass die Stromzuführung für die Einleitung des elektrischen Stromes in die Anodenschüttung aus mit Edelmetall und/oder Edelmetalloxid überzogenem Titan besteht.

Mit der erfindungsgemäßen Vorrichtung kann nun über die Form des Diaphragmas die äußere Form der Anode - insbesondere die der Kathode zugewandte Seite - gewählt werden, wobei man gleichzeitig durch die Eigenschaft der Kohlepartikelschüttung sehr günstige Anodeneigenschaften erhält. Vorteilhaft sind z. B. die sehr große Anodenoberfläche, die sich als Summe der Oberflächen aller Einzelpartikel ergibt, eine Reduzierung der Grenzflächeneffekte durch Verringerung von Konzentrationsgefällen und ein verbessertes Ablöseverhalten der sich bildenden Gasbläschen aufgrund der körnigen und scharfkantigen Struktur der Kohlenstoffpartikel.

Außerdem können Anode und Kathode ohne Kurzschlußrisiko in sehr enger räumlicher Nachbarschaft angeordnet werden, wodurch der elektrische Widerstand zwischen Anode und Kathode besonders gering gehalten werden kann. Dabei erweist es sich weiterhin als vorteilhaft, daß der verwendete Kunststoff-Sinterwerkstoff in sich steif und in einer festen dreidimensionalen Form mit Hilfe eines entsprechend angepaßten Sinterwerkzeuges in beliebigen Geometrien (Rohre, Hohlkegel, Stufenkegel, Hohlzylinder usw.) hergestellt werden kann. Für Variationen von Dichten, Porengrößen und anderen Materialeigenschaften steht eine riesige Auswahl von sinterfähigen Kunststoffen zur Verfügung.

Erfindungsgemäß besteht die Stromzuführung aus mit Edelmetall und/oder Edelmetalloxid überzogenem Titan, um eine besonders hohe Beständigkeit gegen die Elektrolyse zu erreichen.

In der oben zitierten US-A 3,915,822 wird im übrigen keinerlei Hinweis darauf gegeben, daß mit dem verwendeten Diaphragma die äußere Form einer Elektrolyseanode und deren räumliche Lage zur Kathode gezielt und definiert bestimmt werden soll. Mit den dort vorgeschlagenen isolierenden Netzen als Diaphragma ist dies auch aus den oben genannten Gründen nicht oder nur bedingt möglich.

In JP 9253652 A, Referat aus Patent Abstracts of Japan, ist zwar eine Vorrichtung zur elektrolytischen Behandlung von wässrigen Lösungen mit einer Anode und einer Kathode offenbart, jedoch weist diese bekannte Elektrolysezelle keine Schüttung von Kohlenstoffpartikeln auf. Insbesondere sind die dort wahlweise (alterniv zu Ferriten) eingesetzten Kohlenstoffpartikel keinesfalls an ihrem Platz fixiert, wie dies bei der Schüttung in der erfindungsgemäßen Vorrichtung der Fall ist, sondern es handelt sich um eine Schwebebettvorrichtung.

Die Anode besteht bei dieser bekannten Vorrichtung lediglich aus einem an einem Ende konisch zulaufenden Zylinder, der von strömendem Wasser umgeben ist, in welchem fein verteilte Partikel in der Schwebe gehalten werden sollen. Bei dieser Vorrichtung wird einerseits die extrem lockere Ansammlung von Partikeln zwangsweise durchströmt, was auch erforderlich ist, um das Schwebebett aufrechtzuerhalten. Es handelt sich also gerade nicht um eine Schüttung im üblichen Sinne, wo die geschütteten Partikel an ihrem Platz im wesentlichen fixiert sind. Andererseits ergeben sich durch diese gravierenden strukturellen Unterschiede auch völlig andere Effekte und es werden auch andere Ziele als bei der erfindungsgemäßen Vorrichtung verfolgt: Von der Oberfläche der konisch zulaufenden Anode wird nämlich bei der bekannten Vorrichtung Ladung an zufällig vorbeiströmende und die Oberfläche der Anode berührende Partikel abgegeben, die ihrerseits durch Kollision mit anderen Partikeln ihre Ladung sozusagen von Partikel zu Partikel weiterreichen. Ein erheblicher Stromfluß kann in einem solchen Schwebebett nicht zustandekommen, im Gegenteil ergibt sich ein extrem hoher elektrischer Widerstand, da die einzelnen Partikel von dem sie umgebenden Wasser jeweils isoliert sind und lediglich dann Ladung weitergeben, wenn sie auf andere Partikel treffen.

Die Festbettschüttung von an ihrem Platz fixierten Kohlenstoffpartikeln bei der erfindungsgemäßen Vorrichtung hingegen hat einen äußerst geringen internen elektrischen Widerstand, so daß problemlos ein erheblicher Stromfluß innerhalb der Anode, die von der Feststoffschüttung gebildet wird, erfolgen kann. Die Anode **besteht** nämlich erfindungsgemäß aus der Festbettschüttung, einer in die Schüttung hineinragenden Stromzuführung sowie den die Anode umgebenden Wänden einschließlich des Diaphragmas als formgebenden Teilen der Anode.

Im Gegensatz zu der bekannten Vorrichtung nach JP 9253652 A erfolgt keine zwangsweise Durchströmung der Festbettschüttung, sondern höchstens ein Anströmen der im Randbereich beim Diaphragma positionierten Partikel. Außerdem werden die Kohlenstoffpartikel der Festbettschüttung keinesfalls transportiert sondern bleiben im wesentlichen lagefixiert mit engem Körperkontakt zu benachbarten Partikeln, so daß aufgrund der ständigen Berührung vieler Feststoffoberflächen ein hoher Stromfluß ohne großen elektrischen Widerstand innerhalb der Schüttung als durchgängige Stromverbindung möglich wird.

Eine weitere Elektrolyseeinrichtung zur Erzeugung von Trinkwasser ist bekannt aus der JP 53-88665 A. Dabei ist eine gesinterte Membran vorgesehen, die einen Elektrolysetank in zwei Hälften trennt. Eine Schüttung von Kohlenstoffpartikeln enthält die bekannte Vorrichtung nicht.

Aus der EP 723 936 A2 ist ebenfalls eine Vorrichtung zur Elektrolyse von Wasser bekannt, bei der eine zusammengesetzte Elektrode vorgesehen ist, die aus mehreren Platten aufgebaut ist, welche von außen nach innen aus elektrisch leitendem Material, aus elektrisch nicht leitendem Material sowie im Kern aus einem porösen Diaphragma bestehen. Eine Schüttung aus Kohlenstoffpartikeln ist nicht vorgesehen.

Die DE 30 14 887 A1 schließlich beschreibt eine Elektrolyseeinrichtung, bei der eine Elektrolysezelle durch eine Membran in eine Anodenkammer und eine Kathodenkammer aufgeteilt wird. Die Membran soll vorzugsweise eine Platte aus Zypressenholz sein, kann jedoch auch aus synthetischen Materialien aufgebaut sein. In beiden Kammern der Elektrolysezelle ist jeweils eine Mischung aus leitfähigen und nicht leitfähigen Partikeln vorgesehen, wobei die leitfähigen Partikel auch Kohlenstoff-Partikel umfassen können. Damit soll eine Bipolarität der stromleitenden Partikel und damit das gleichzeitige Auftreten von Oxidations- und Reduktionsreaktionen an doppelpolarisierten Partikeln vermieden werden. Die mit dieser Struktur beabsichtigten Wirkmechanismen sind also deutlich von denen der erfindungsgemäßen Vorrichtung verschieden. Auch ist bei der bekannten Elektrolysiereinrichtung keine Anode vorgesehen, die einen speziellen Aufbau wie bei der erfindungsgemäßen Vorrichtung aufweist. Außerdem ist die Mischung aus leitenden und nicht leitenden Partikeln auch im Raum zwischen dem Diaphragma und der als Kathode wirkenden Elektrode der bekannten Elektrolysiereinrichtung angeordnet. Schließlich ist auch nicht andeutungsweise offenbart, daß mit Hilfe des Diaphragmas und der zunächst verformbaren Kohlenstoffschüttung die äußere Form der Anode, deren räumliche Lage sowie deren Abstand zur nächstgelegenen Kathode bestimmt werden kann.

Besonders bevorzugt ist eine Ausführungsform der Erfindung, bei der der mittlere Abstand zwischen dem Diaphragma und der nächstgelegenen Kathode kleiner als 50 mm ist, vorzugsweise zwischen 1 mm und 10 mm.

Bei anderen Ausführungsformen besteht die Stromzuführung für die Einleitung des elektrischen Stromes in die Anodenschüttung aus Metall.

Bei einer weiteren bevorzugten Ausführungsform der erfindungsgemäßen Vorrichtung enthält die Anode eine Aktivkohleschüttung. Die Anodenschüttung kann aber auch Graphitpartikel enthalten, was die elektrische Leitfähigkeit erhöht.

Vorteilhaft ist auch eine Ausführungsform der erfindungsgemäßen Vorrichtung, bei der die Schüttungsdichte der Kohlenstoffpartikel zwischen 400 und 600 g/l beträgt.

Bevorzugt weisen die Kohlenstoffpartikel der Anodenschüttung eine Korngröße zwischen 0,1 und 10 mm, vorzugsweise zwischen 0,5 und 2 mm auf.

In einer besonders bevorzugten Ausgestaltung der erfindungsgemäßen Vorrichtung ist das Diaphragma aus feinporigem Polyethylen-Sintermaterial hergestellt, dessen Poren kleiner als die Korngröße der für die Anodenschüttung verwendeten Kohlepartikel sind.

Eine weitere besonders bevorzugte Ausführungsform der erfindungsgemäßen Vorrichtung zeichnet sich dadurch aus, daß das Diaphragma eine Dicke von 0,5 bis 50 mm, vorzugsweise zwischen 1 und 5 mm aufweist.

Eine vorteilhafte räumliche Anordnung der erfindungsgemäßen Vorrichtung zeichnet sich dadurch aus, daß das Diaphragma als zylindrische Hülse ausgebildet ist, die mit der Kohleschüttung der Anode gefüllt und von der Kathode umgeben ist.

Alternativ kann bei einer weiteren Ausführungsform das Diaphragma und eine das Diaphragma umgebende äußere Wand einen Ringspalt einschließen, der mit der Kohleschüttung der Anode befüllt ist, und das Diaphragma die Kathode ringförmig umschließen.

Ganz besonders bevorzugt ist dabei eine Weiterbildung dieser Ausführungsform, bei der die Kathode bürstenförmig, insbesondere mit sternförmig radial abstehenden Borsten ausgebildet ist. Eine derartige bürstenförmige Anordnung an sich ist in der (nachveröffentlichten) deutschen Patentanmeldung mit dem amtlichen Aktenzeichen 198 52 956.2-41 ausführlich beschrieben.

Ganz besonders bevorzugt ist eine Weiterbildung, bei der das Diaphragma gleichzeitig als Abstandhalter und Isolator zwischen der Anode, insbesondere dem Schüttungsmaterial, und der Kathode fungiert.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig.1: einen schematischen Vertikalschnitt durch eine erste Ausführungsform der erfindungsgemäßen Vorrichtung;
- Fig.2: einen schematischen Horizontalschnitt durch eine weitere Ausführungsform, bei der eine stabförmige Anode zylindermantelförmig von der Kathode umgeben ist;
- Fig.3: eine Ausführungsform, bei der eine stabförmige Kathode von der erfindungsgemäß ausgebildeten Anode ringförmig umgeben ist; und
- Fig.4: wie Fig.3, aber mit bürstenförmiger Kathode.

### Beispiel 1:

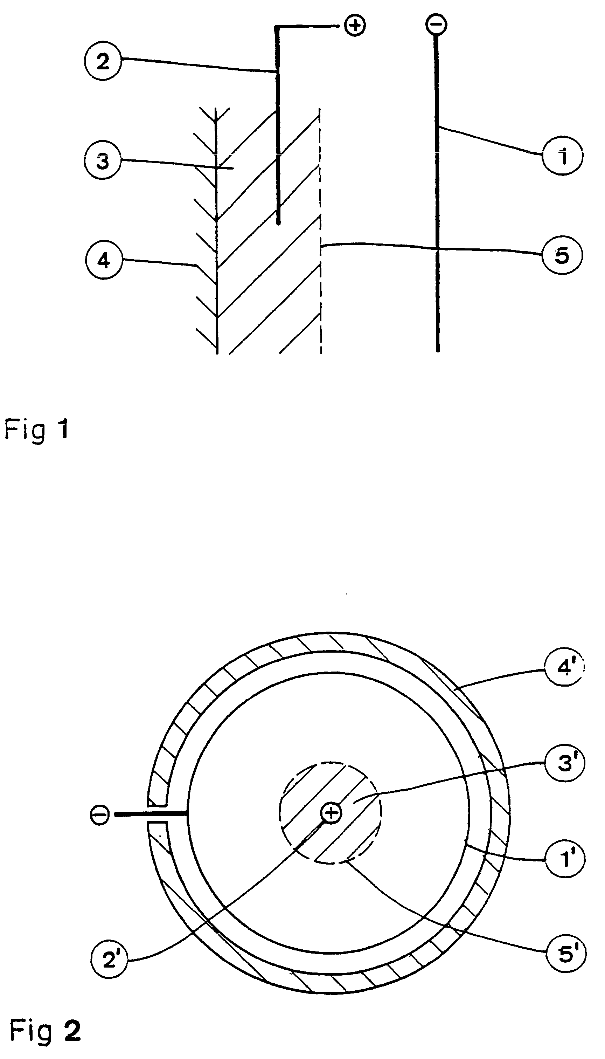

Eine Ausführungsform der erfindungsgemäßen Vorrichtung ist in Fig. 1 dargestellt. Eine Kathode 1 ist gegenüber einem Diaphragma 5 angeordnet, das eine als Anode 3 wirkende Schüttung von Kohlepartikeln, zusammen mit einer zweiten Wand 4 - die vorzugsweise die Außenwand eines Elektrolysebehälters bildet - an ihrem Platz fixiert. Der Elektrolysestrom wird hierbei über eine elektrolytisch beständige, vorzugsweise metallene Stromzuführung 2 bestehend z. B. aus platiniertem Titan in die Anode 3 (Kohlenstoffpartikelschüttung) eingeleitet.

### Beispiel 2:

Eine besonders einfache und kostengünstige Anordnung ist in Fig. 2 dargestellt. Hierbei ist die Anode 3' aus einer Kohlenstoffpartikelschüttung vom Diaphragma 5' zylindermantelförmig umgeben und die metallene Stromzuführung 2' entspricht der im Beispiel 1 beschriebenen. Die Kathode 1' ist um die Anode 3' bzw. das Diaphragma 5' herumgeführt, bevorzugt herumgewickelt und besonders bevorzugt mit direktem Kontakt um das hülsenförmige Diaphragma 5' herumgewickelt, so daß der räumliche Abstand zwischen Anode 3' und Kathode 1' sich auf die Dicke des Diaphragmas 5' reduziert, wodurch der elektrische Widerstand der Elektrolysezelle, die von der Behälterwand 4' umschlossen wird, minimiert werden kann.

### Beispiel 3:

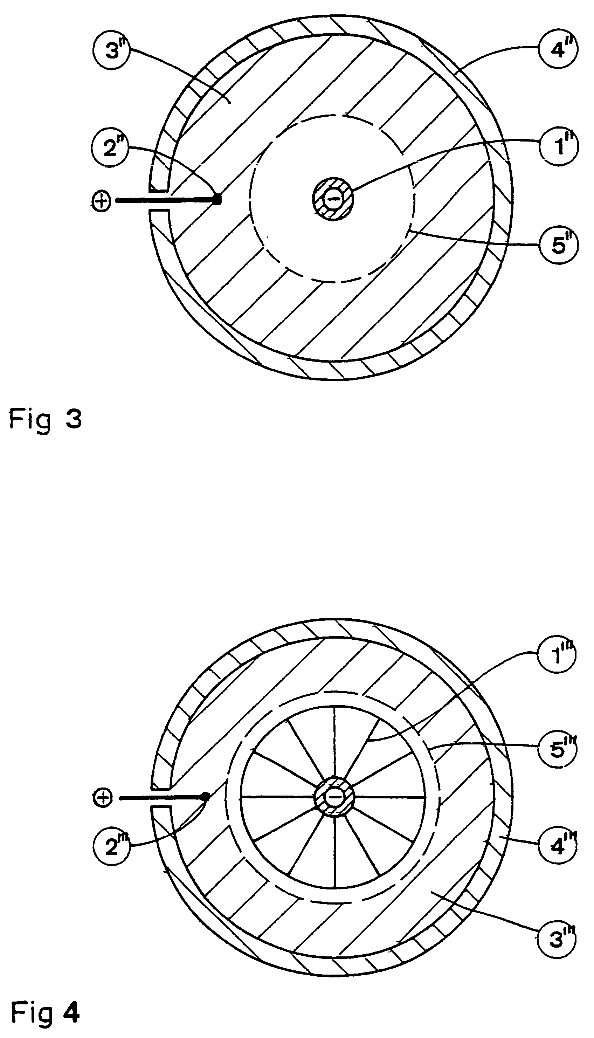

Eine besonders bevorzugte Ausführungsform ist in Fig. 3 dargestellt. Hier ist eine im wesentlichen stabförmige Kathode 1'' von dem Diaphragma 5'' umhüllt, welches mit der Behälterwand 4'' die Anode 3'' mit ihrer Kohlepartikelschüttung in einem ringspaltförmigen Hohlzylinder aufnimmt. Der elektrische Strom wird über die Stromzuführung 2 ' ' wie in Beispiel 1 zugeleitet. Der besondere Vorteil dieser Anordnung liegt in der nahezu beliebig vergrößerbaren Anodenoberfläche bei gleichzeitig äußerst geringen Anodenkosten.

### Beispiel 4:

Ganz besonders bevorzugt ist jedoch die in Beispiel 3 beschriebene Anordnung in Verbindung mit einer Kathode 1''' in der Form einer zylindrischen Bürste, wie sie in Fig. 4 angedeutet ist. Hierdurch lassen sich optimale Anoden- und Kathodenoberflächen und - oberflächenstrukturen äußerst kostengünstig herstellen.

### Beispiel 5:

Besonders bevorzugt wird als Diaphragma 5, 5', 5'', 5''' ein feinporiges Polyethylen-Sintermaterial verwendet, dessen Poren kleiner als die Korngröße der für die Anodenschüttung verwendeten Kohlepartikel sind.

### Beispiel 6:

Die Korngröße der für die Anodenschüttung verwendeten Kohlepartikel liegt bevorzugt zwischen 0,1 und 10 mm, besonders bevorzugt zwischen 0,5 und 2 mm Durchmesser.

## Patentansprüche

1. Vorrichtung zur Verhinderung von unerwünschten Kalkausfällungen durch elektrolytische Behandlung von Wasser bzw. wässrigen Lösungen, mit mindestens zwei räumlich voneinander beabstandeten Elektroden, die im Betriebszustand auf unterschiedlichen elektrischen Potentialen gehalten werden, wobei die Potentialdifferenz mindestens so groß gewählt ist, dass eine Elektrolyse von Wasser zwischen den Elektroden erfolgt, mit einer Schüttung von Kohlenstoffpartikeln, in die elektrolytisch beständige Stromzuführungen (2; 2'; 2''; 2''') hineinragen, über welche Elektrolysestrom in die Elektroden eingeleitet wird, und mit einem Diaphragma (5; 5'; 5''; 5''') aus nichtleitendem Material, welches für die wässrige Lösung und den elektrischen Strom durchlässig ist, nicht jedoch für die Kohlenstoffpartikel der Schüttung, wobei mindestens eine Anode (3; 3' ; 3'' ; 3''') vorgesehen ist, die aus einer Stromzuführung (2; 2'; 2''; 2'''), der Schüttung von Kohlenstoffpartikeln, in welche die Stromzuführung hineinragt, sowie dem die Schüttung umgebenden Diaphragma (5; 5'; 5''; 5''') aufgebaut ist, wobei das Diaphragma (5; 5'; 5''; 5''') so ausgebildet ist, dass es die äußere Form der Anode (3; 3'; 3''; 3'''), deren räumlichen Lage, sowie deren Abstand zur nächstgelegenen Kathode (1; 1'; 1''; 1''') bestimmt, und wobei zwischen dem Diaphragma (5; 5'; 5'';5''') und der nächstgelegenen Kathode (1; 1'; 1''; 1''') keine Kohlenstoffpartikel angeordnet sind,
**dadurch gekennzeichnet,**
**dass** die Kohlenstoffpartikel der Schüttung an ihrem Platz fixiert sind und Graphitpartikel enthalten, dass die Anode (3; 3'; 3''; 3''') aus einer Festbettschüttung, einer in die Schüttung hineinragenden Stromzuführung (2; 2'; 2''; 2''') sowie den die Anode (3; 3'; 3''; 3''') umgebenden Wänden (4; 4''; 4''') einschließlich des Diaphragmas (5; 5'; 5''; 5''') als formgebenden Teilen der Anode (3; 3'; 3''; 3''') besteht, dass die Schüttungsdichte der Kohlenstoffpartikel zwischen 400 und 750 g/l beträgt, dass das Diaphragma (5; 5'; 5''; 5''') aus einem Sinterwerkstoff aus Kunststoff besteht, dessen Poren kleiner als die Korngröße der für die Anodenschüttung verwendeten Kohlenstoffpartikel sind, und dass die Stromzuführung (2; 2'; 2''; 2''') für die Einleitung des elektrischen Stromes in die Anodenschüttung aus mit Edelmetall und/oder Edelmetalloxid überzogenem Titan besteht.

2. Vorrichtung nach Anspruch 1, **dadurch gekennzeichnet, dass** der mittlere Abstand zwischen dem Diaphragma (5; 5'; 5''; 5''') und der nächstgelegenen Kathode (1; 1'; 1''; 1''') kleiner als 50 mm ist, vorzugsweise zwischen 1 mm und 10 mm.

3. Vorrichtung nach einem der vorhergehenden Ansprüche, **dadurch gekennzeichnet, dass** die Anode (3; 3'; 3''; 3''') eine Aktivkohleschüttung enthält.

4. Vorrichtung nach einem der vorhergehenden Ansprüche, **dadurch gekennzeichnet, dass** die Schüttungsdichte der Kohlenstoffpartikel zwischen 400 und 600 g/l beträgt.

5. Vorrichtung nach einem der vorhergehenden Ansprüche, **dadurch gekennzeichnet, dass** die Kohlenstoffpartikel der Anodenschüttung eine Korngröße zwischen 0,1 und 10 mm, vorzugsweise zwischen 0,5 und 2 mm aufweisen.

6. Vorrichtung nach einem der vorhergehenden Ansprüche, **dadurch gekennzeichnet, dass** das Diaphragma (5; 5'; 5''; 5''') eine Dicke zwischen 0,5 und 50 mm, vorzugsweise von 1 bis 5 mm aufweist.

7. Vorrichtung nach einem der vorhergehenden Ansprüche, **dadurch gekennzeichnet, dass** das Diaphragma (5; 5'; 5''; 5''') aus feinporigem Polyethylen-Sintermaterial hergestellt ist.

8. Vorrichtung nach einem der vorhergehenden Ansprüche, **dadurch gekennzeichnet, dass** das Diaphragma (5') als zylindrische Hülse ausgebildet ist, die mit der Kohleschüttung der Anode (3') gefüllt und von der Kathode (1') umgeben ist.

9. Vorrichtung nach einem der Ansprüche 1 bis 8, **dadurch gekennzeichnet, dass** das Diaphragma (5''; 5''') und eine das Diaphragma (5''; 5''') umgebende äußere Wand (4''; 4''') einen Ringspalt einschließen, der mit der Kohleschüttung der Anode (3''; 3''') befüllt ist, und dass das Diaphragma (5''; 5''') die Kathode (1''; 1''') ringförmig umschließt.

10. Vorrichtung nach Anspruch 9, **dadurch gekennzeichnet, dass** die Kathode (1''') bürstenförmig, insbesondere mit sternförmig radial abstehenden Borsten ausgebildet ist.

## Claims

1. Device for preventing undesired lime precipitations through electrolytic treatment of water or aqueous solutions, with at least two spatially separated electrodes which are kept at different electric potentials during operation, wherein the potential difference is selected to be at least that large as to effect electrolysis of water between the electrodes, comprising a bulk of carbon particles, into which project electrolytically stable current supplies (2; 2'; 2"; 2"'), via which electrolytic current is introduced into the electrodes, and a diaphragm (5; 5'; 5"; 5''') of non-conducting material which is permeable to the aqueous solution and the electric current, but not to the carbon particles of the bulk, wherein at least one anode (3; 3'; 3"; 3''') is provided which is formed from a current supply (2; 2'; 2"; 2"'), the bulk of carbon particles into which the current supply projects, and the diaphragm (5; 5'; 5"; 5"') surrounding the bulk, wherein the diaphragm (5; 5'; 5"; 5''') is designed to determine the outer shape of the anode (3; 3'; 3"; 3'''), its spatial position and its separation from the next cathode (1; 1'; 1"; 1'''), and wherein no carbon particles are disposed between the diaphragm (5; 5'; 5"; 5''') and the next cathode (1; 1'; 1"; 1'''), **characterized in that** the carbon particles of the bulk are fixed in place and contain graphite particles, the anode (3; 3'; 3"; 3''') consists of a fixed bed bulk, a current supply (2, 2'; 2"; 2''') projecting into the bulk, and the walls (4; 4"; 4''') surrounding the anode (3, 3'; 3"; 3"') including the diaphragm (5; 5'; 5"; 5'''), being the shaping parts of the anode (3; 3'; 3"; 3'''), the bulk density of the carbon particles is between 400 and 750 g/l, the diaphragm (5, 5'; 5"; 5"') consists of a sintered material of plastic whose pores are smaller than the grain size of the carbon particles used for the anode bulk, and the current supply (2; 2'; 2"; 2"') for introduction of the electric current into the anode bulk consists of titanium coated with precious metal and/or precious metal oxide.

2. Device according to claim 1, **characterized in that** the average separation between the diaphragm (5, 5', 5"; 5''') and the next cathode (1; 1'; 1"; 1''') is less than 50mm, preferably between 1 mm and 10 mm.

3. Device according to any one of the preceding claims, **characterized in that** the anode (3; 3'; 3"; 3''') contains activated carbon bulk.

4. Device according to any one of the preceding claims, **characterized in that** the bulk density of the carbon particles is between 400 and 600 g/l.

5. Device according to any one of the preceding claims, **characterized in that** the carbon particles of the anode bulk have a grain size of between 0.1 and 10 mm, preferably between 0.5 and 2 mm.

6. Device according to any one of the preceding claims, **characterized in that** the diaphragm (5; 5'; 5"; 5''') has a thickness of between 0.5 and 50 mm, preferably between 1 and 5mm.

7. Device according to any one of the preceding claims, **characterized in that** the diaphragm (5; 5'; 5"; 5''') is produced from fine pored polyethylene sintered material.

8. Device according to any one of the preceding claims, **characterized in that** the diaphragm (5') is formed as cylindrical sleeve which is filled with the carbon bulk of the anode (3') and surrounded by the cathode (1').

9. Device according to any one of the claims 1 through 8, **characterized in that** the diaphragm (5"; 5"') and an outer wall (4"; 4''') surrounding the diaphragm (5"; 5''') include an annular gap which is filled with the carbon bulk of the anode (3"; 3'''), and the diaphragm (5"; 5"') annularly surrounds the cathode (1"; 1''').

10. Device according to claim 9, **characterized in that** the cathode (1''') has the shape of a brush, in particular, having bristles which protrude in a radial direction like a star.

## Revendications

1. Dispositif pour empêcher la formation de dépôts calcaires indésirables au moyen d'un traitement électrolytique de l'eau ou de solutions aqueuses, comportant au moins deux électrodes distantes spatialement l'une de l'autre et qui sont maintenues, dans l'état de fonctionnement, à des potentiels électriques différents, la différence de potentiel étant choisie au moins avec une valeur telle qu'il se produit une électrolyse de l'eau entre les électrodes, comportant une accumulation en vrac de particules de carbone, dans laquelle pénètrent des systèmes d'alimentation en courant (2;2';2";2"') existant sous forme électrolytique et au moyen desquels le courant d'électrolyse est introduit dans les électrodes, et comportant un diaphragme (5;5';5";5"') réalisé en un matériau non conducteur et qui est perméable pour la solution aqueuse et pour le courant électrique, mais pas pour les particules de carbone de l'accumulation en vrac, et dans lequel il est prévu au moins une anode (3;3';3";3"'), qui est constituée par une alimentation en courant (2;2';2";2"'), l'accumulation en vrac de particules de carbone, dans laquelle l'alimentation en courant pénètre, ainsi que par le diaphragme (5;5';5";5"') entouré par l'accumulation en vrac, et dans lequel le diaphragme (5;5';5";5"') est agencé de telle sorte qu'il détermine la forme extérieure de l'anode (3;3'; 3";3"'), sa position spatiale ainsi que sa distance par rapport à la cathode directement voisine (1;1';1";1"'), et dans lequel aucune particule de carbone n'est disposée entre le diaphragme (5;5';5";5"') et la cathode directement voisine (1;1';1";1"'),
**caractérisé en ce**
**que** les particules de carbone de l'accumulation en vrac sont fixes dans leur position et maintiennent des particules de graphite, que l'anode (3;3';3";3"') est constituée par une accumulation en vrac sous la forme d'un lit fixe, par une alimentation en courant (2;2';2";2"'), qui pénètre dans l'accumulation en vrac, ainsi que par les parois (4;4";4"') qui entourent l'anode (3;3';3";3"'), ainsi que par le diaphragme (5;5';5";5"') en tant que parties définissant la forme de l'anode (3;3';3";3"'), que la densité de l'accumulation en vrac des particules de carbone est comprise entre 400 et 750 g/l, que le diaphragme (5;5';5"; 5"') est réalisé en un matériau fritté constitué d'une matière plastique, dont les pores ont une taille inférieure à la granulométrie des particules de carbone utilisées pour l'accumulation en vrac de l'anode, et que l'alimentation en courant (2;2';2";2"') pour l'introduction du courant électrique dans l'accumulation en vrac de l'anode est constituée par du titane recouvert par un métal précieux et/ou un oxyde de métal précieux.

2. Dispositif selon la revendication 1, **caractérisé en ce que** la distance moyenne entre le diaphragme (5;5';5";5"') et la cathode la plus voisine (1;1';1";1"') est inférieure à 50 mm et de préférence est comprise entre 1 mm et 10 mm.

3. Dispositif selon l'une des revendications précédentes, **caractérisé en ce que** l'anode (3;3';3";3"') contient une accumulation en vrac de charbon actif.

4. Dispositif selon l'une des revendications précédentes, **caractérisé en ce que** la densité d'accumulation en vrac des particules de carbone est comprise entre 400 et 600 g/l.

5. Dispositif selon l'une des revendications précédentes, **caractérisé en ce que** les particules de carbone de l'accumulation en vrac de l'anode possèdent une granulométrie comprise entre 0,1 et 10 mm et de préférence entre 0,5 et 2 mm.

6. Dispositif selon l'une des revendications précédentes, **caractérisé en ce que** le diaphragme (5;5';5";5"') possède une épaisseur comprise entre 0,5 et 50 mm,. de préférence entre 1 et 5 mm.

7. Dispositif selon l'une des revendications précédentes, **caractérisé en ce que** le diaphragme (5;5';5";5"') est réalisé en un matériau fritté à base de polyéthylène à pores fins.

8. Dispositif selon l'une des revendications précédentes, **caractérisé en ce que** le diaphragme (5') est agencé sous la forme d'une douille cylindrique, qui est remplie par l'accumulation en vrac de carbone de l'anode (3') et est entourée par la cathode (1').

9. Dispositif selon l'une des revendications 2 à 8, **caractérisé en ce que** le diaphragme (5";5"') et une paroi extérieure (4";4"') entourant le diaphragme (5";5"') entourent une fente annulaire, qui est chargée par l'accumulation en vrac du carbone de l'anode (3";3"') et que le diaphragme (5";5"') entoure selon une disposition annulaire la cathode (1";1"').

10. Dispositif selon la revendication 9, **caractérisé en ce que** la cathode (1"') est agencée sous la forme d'une brosse, notamment comportant des poils qui font saillie radialement à la manière d'une étoile.
